# EUROPEAN PATENT APPLICATION

(11) **EP 3 805 136 A1**
(43) Date of publication of application: **14.04.2021**
(21) Application number: 19848611.0
(22) Date of filing: 16.01.2019
(51) Int. Cl.: B65G 63/00

(54) **RIVER AND OCEAN COMBINED TRANSPORTATION CONTAINER TRANSPORTATION SYSTEM AND METHOD BASED ON RAIL CONTAINER TRUCKS**

(30) Priority: 09.08.2018 CN 201810904035
(71) Applicant: China Railway Major Bridge Reconnaissance & Design Institute Co., Ltd., Wuhan, Hubei 430000 (CN); China Railway Wuhan Survey and Design & Institute Co., Ltd., Wuhan, Hubei 430074 (CN)
(72) Inventor: XIAO, Yusong, Wuhan, Hubei 430074 (CN); FANG, Yafei, Wuhan, Hubei 430074 (CN); YANG, Jingmin, Wuhan, Hubei 430074 (CN); QIN, Shunquan, Wuhan, Hubei 430074 (CN); ZHANG, He, Wuhan, Hubei 430074 (CN); WANG, Zengli, Wuhan, Hubei 430074 (CN); HUANG, Zexing, Wuhan, Hubei 430074 (CN); MEI, Dapeng, Wuhan, Hubei 430074 (CN); HUANG, Xiaojun, Wuhan, Hubei 430074 (CN)
(74) Representative: Hanna Moore + Curley
(86) International application number: PCT/CN2019/071959
(87) International publication number: WO 2020/029546

(57) **Abstract**

The invention provides a river and ocean combined transportation container transportation system and method based on rail container trucks, the system comprising: a first port container management subsystem, used for generating and transmitting container combined transportation forecast information and a loading plan; a railway transportation management subsystem, used for starting a traction engine (206) so as to connect rail container trucks parked in a preset area of a first port (21) and are loaded with containers so as to form a railway train (211) loaded with containers; dispatching a railway train to travel to a second port (31) according to railway transportation planning, and transmitting practical information for the container combined transport; a second port container management subsystem, used for determining a target storage yard location, a target loading and unloading machine and a target transportation ship (301), and generating an unloading plan and a shipment plan; and a target loading and unloading machine, used for unloading the railway train (211), placing the containers in the target storage yard location, and loading the containers to the target transportation ship (301). The present system improves universality of the system and container transportation efficiency.

## Description

### Technical Field

The invention relates to the technical field of cargo transportation, in particular to a river and ocean combined transportation container transportation system and method based on rail container trucks.

### Background Art

Container transportation is a novel, high-efficiency and high-benefit transportation, with containers as a carrier, collecting the goods as a container unit for loading and unloading, and transportation operation using large-scale loading and unloading machinery and large-scale vehicle of transporting, thereby accomplishing a transportation task. The container transportation can reduce the wear and the loss of goods, guarantee the transportation quality, and tends to be significant for the development of cargo transportation.

The container transportation mostly adopts a combined transportation mode, that is, containers are used as a transportation unit, and different transportation modes are organically combined together to form continuous and comprehensive integrated cargo transportation, such as river and ocean combined transportation, river and railway combined transportation, road and railway combined transportation, ocean and road combined transportation, etc.

At present, for most of the container transportation based on river and ocean combined transportation, ferry ships are adopted to complete the container transfer between two ports, but implementation of the method is limited by the water depth of a port entrance channel. Due to the fact that the ships are limited in passing through some ports, as well as the ship tonnage and the number of ships, the requirement of the ferry ship operation on the transportation capacity cannot be met, thus the container transportation cannot be realized, indicating the ferry ship transportation is not universal enough; due to the fact that the speed of the ferry ships is not high, the tonnage of the ship is small, and the transportation efficiency is low when the ferry ships are used for transferring containers between two ports, therefore, it is necessary to design a new container transportation system and method based on river and ocean combined transportation to overcome the problems.

### Summary of the Invention

The invention aims to overcome the defects of the prior art and provides a river and ocean combined transportation container transportation system and method based on rail container trucks, so that the universality of the system and the container transportation efficiency are improved.

The invention is realized as follows.

In a first aspect, the invention provides a river and ocean combined transportation container transportation system based on rail container trucks, which comprises a first port container management subsystem, a railway transportation management subsystem, a second port container management subsystem, rail container trucks, a first class loading and unloading machine for loading and unloading containers at a first port and a second class loading and unloading machine for loading and unloading containers at a second port, the first class loading and unloading machine comprising a first shore crane; wherein
the first port container management subsystem is used for receiving container warehouse order information transmitted by a first class transportation ship and generating container combined transportation forecast information based on the container warehouse order information; generating a loading plan and issuing the loading plan to the first shore crane, the rail container truck and the railway transportation management subsystem according to the container combined transportation forecast information and a front storage yard condition of the first port; transmitting the container combined transportation forecast information to a railway transportation management subsystem after a customs release instruction is detected; the first class transportation ship is a container transportation ship arriving at the first port;
the railway transportation management subsystem is used for starting a traction engine according to the obtained loading plan so as to enable the traction engine to connect the rail container trucks parked in the preset area of the first port and loaded with the containers to form a railway train loaded with the containers; generating railway transportation planning according to the obtained container combined transportation forecast information, and dispatching the railway train to travel to a preset parking lot on one side of a front storage yard of a second port according to the railway transportation planning when the railway train satisfying the preset transportation conditions is detected; generating practical information of container combined transportation using the practical information of the loaded containers when the railway train arrives at a preset parking lot on one side of a front storage yard of a second port; and transmitting the practical information of the container combined transportation to a second port container management subsystem; the railway train travels by means of power provided by a traction engine;
the first shore crane is used for loading the containers in the first class transportation ship to the rail container trucks according to the loading plan;
the rail container trucks are used for loading the obtained containers according to the loading plan and traveling to a preset area of a first port;
the second port container management subsystem is used for determining a target storage yard location, a target loading and unloading machine and a target transportation ship based on practical information of the obtained container combined transportation, generating an unloading plan and a shipment plan, and issuing the unloading plan to the target loading and unloading machine; and issuing the shipment plan to the target loading and unloading machine after the target transportation ship arriving at the second port is detected; and
the target loading and unloading machine is used for unloading the containers loaded by the railway train according to the unloading plan, and parking the obtained unloaded containers to the target storage yard location; and loading the containers placed at the target storage yard location to the target transportation ship according to the shipment plan.

Optionally, the first port container management subsystem is further used for transmitting the container combined transportation forecast information to the second port container management subsystem after a customs release instruction is detected;
the second port container management subsystem is further used for determining a predetermined storage yard location reserved for placing containers, a predetermined second class loading and unloading machine reserved for loading and unloading containers and a predetermined second class transportation ship reserved for transporting containers based on the obtained container combined transportation forecast information;
the second port container management subsystem determines a target storage yard location, a target loading and unloading machine and a target transportation ship based on practical information of the obtained container combined transportation, specifically: the second port container management subsystem determines a target storage yard location from a predetermined yard location, a target loading and unloading machine from a predetermined second class loading and unloading machine, and a target transportation ship from a predetermined second class transportation ship based on practical information of the obtained container combined transportation.

Optionally, the system further comprises a container management subsystem,
the first port container management subsystem is further used for transmitting the container combined transportation forecast information to the container management subsystem;
the railway transportation management subsystem is further used for transmitting practical information of the container combined transportation to the container management subsystem; and the second port container management subsystem is further used for transmitting the transportation information of the containers loaded to the target transportation ship to the container management subsystem.

Optionally, a preset area of a first port is a preset parking lot on one side of a front storage yard of the first port.

Optionally, the railway transportation management subsystem detects that the railway train satisfies preset transportation conditions, specifically:
a total number of loaded containers of the railway train reaching a total number of containers in the container combined transportation forecast information is detected; or,
the containers loaded on the railway train satisfying the preset loading range of the railway train is detected; or,
a number of rail container trucks used to form a railway train reaching a preset total number of rail container trucks is detected.

Optionally, according to the railway transportation plan, the railway transportation management subsystem dispatches a railway train to travel to a preset parking lot on one side of a front storage yard of the second port according to the railway transportation plan, specifically:
according to the railway transportation plan, a railway train is dispatched to start from a preset parking lot on one side of a front storage yard of a first port, enter a special railway section line between a first port and a second port across a first port management boundary, travel to a second port management boundary through the special railway section line, and travel to a preset parking lot on one side of the front storage yard of the second port across a second port management boundary.

Optionally, the target loading and unloading machine comprises a rail crane and a gantry crane, the target loading and unloading machine unloads the containers loaded by the railway train according to the unloading plan, and the unloaded containers are placed to a target storage yard location, specifically:
the gantry crane transfers containers in a railway train at a preset parking lot on one side of a front storage yard of the second port to the rail crane according to the unloading plan; and
the rail crane is used for transferring the loaded container to a target storage yard location according to the unloading plan.

Optionally, the target loading and unloading machine comprises a port container truck, a rail crane and a gantry crane, the target loading and unloading machine unloads containers loaded by railway trains according to the unloading plan, and the unloaded containers are placed to a target storage yard location, specifically:
the gantry crane loads containers in a railway train at a preset parking lot on one side of the front storage yard of the second port to the port container truck according to the unloading plan;
the port container truck loads a container according to the unloading plan and travels to one side of a target storage yard location; and
the rail crane unloads the containers loaded by a port container truck beside the target storage yard location to the target storage yard location according to the unloading plan.

Optionally, the target loading and unloading machine further comprises a second shore crane, and the target loading and unloading machine loads containers placed at a target storage yard location to a target transportation ship according to the shipment plan, specifically:
the rail crane loads the containers placed at a target storage yard location to the port container truck according to the shipment plan;
the port container trucks are used for loading the obtained containers according to the shipment plan and traveling to a place near a ship berth of a second port; and
the second shore crane loads the containers in the port container trucks beside the ship berth of the second port to the target transportation ship according to the shipment plan.

In a second aspect, the invention provides a river and ocean combined transportation container transportation method based on rail container trucks, which comprises:
receiving container warehouse order information transmitted by a first class transportation ship, and
generating container combined transportation forecast information based on the container warehouse order information; generating a loading plan according to container combined transportation forecast information and a front storage yard condition of a first port; a first class transportation ship is a container transportation ship arriving at a first port;
issuing the loading plan to a first shore crane and rail container trucks, so that the first shore crane loads containers in a first class transportation ship to rail container trucks according to the loading plan, and the rail container trucks load the obtained containers according to the loading plan and travel to a preset area of a first port; starting a traction engine according to the loading plan, so that the traction engine connects rail container trucks parked in a preset area of a first port and loaded with containers to form a railway train loaded with containers; and the railway train travels by means of power provided by a traction engine;
generating railway transportation planning according to the container combined transportation forecast information after a customs release instruction is detected;
dispatching the railway train to travel to a preset parking lot on one side of a front storage yard of a second port according to the railway transportation plan when the railway train satisfying the preset transportation conditions is detected, and generating practical information of the container combined transportation by using the practical information of the loaded containers when the railway train arrives at the preset parking lot on one side of the front storage yard of the second port;
determining a target storage yard location, a target loading and unloading machine and a target transportation ship and generating an unloading plan and a shipment plan based on the practical information of the container combined transportation;
issuing the unloading plan to the target loading and unloading machine, so that the target loading and unloading machine unloads the containers loaded by the railway train according to the unloading plan, and parking the obtained unloaded containers to the target storage yard location; and issuing the shipment plan to the target loading and unloading machine after a target transportation ship arriving at the second port is detected, so that the target loading and unloading machine loads the containers placed at the target storage yard location to the target transportation ship according to the shipment plan.

The invention has the following beneficial effects: according to the technical solution provided by the embodiment of the invention, the containers loaded by the first class transportation ship docked at the first port can be unloaded, and the unloaded containers can be loaded on the rail container trucks, and the railway train loaded with the containers can be formed by the rail container trucks loaded with the containers, so that the containers do not need to be transferred from the first class transportation ship to the railway train through third-party equipment, and the number of times of transfer of the containers is reduced, the transportation efficiency is further improved, the containers can be transported from the first port to the second port through the railway train. In the whole process, the containers do not need to be placed at the first port but are directly placed at a front storage yard of the second port, an area occupied in the storage yard of the first port is reduced, the utilization rate of the storage yard is improved, and the railway transportation speed is higher than the transportation speed of the ferry ships, so that the container transportation efficiency is improved; due to the fact that the railway transportation does not depend on the ship capacity, the ship tonnage and the ship quantity of the port, universality of the system is improved.

### Brief Description of the Drawings

In order to more clearly illustrate the embodiments of the invention or the technical solutions in the prior art, reference will now be made briefly to the accompanying drawings, which are used in the description of the embodiments or the prior art, and it will be obvious to a person skilled in the art that the accompanying drawings described below are only some embodiments of the invention, and other drawings may be obtained from these drawings without involving any inventive effort.
Fig. 1 is a schematic diagram illustrating a structure of a river and ocean combined transportation container transportation system based on rail container trucks provided by an embodiment of the invention;
Fig. 2 is a schematic view illustrating an application scenario of a river and ocean combined transportation container transportation system based on rail container trucks provided by an embodiment of the invention;
Fig. 3 is a schematic view of a first port of Fig. 2 provided by an embodiment of the invention;
Fig. 4 is a schematic view of a second port of Fig. 2 provided by an embodiment of the invention;
Fig. 5 is a schematic flow diagram of a river and ocean combined transportation container transportation method based on rail container trucks provided by an embodiment of the invention.

### Detailed Description of the Invention

The technical solutions in the embodiments of the invention will be clearly and completely described below in conjunction with the accompanying drawings in the embodiments of the invention. Obviously, the described embodiments are only a part of the embodiments of the invention, rather than all the embodiments. Based on the embodiments of the invention, all other embodiments obtained by one of ordinary skill in the art without involving any inventive effort are within the scope of the invention.

In order to solve the problems in the prior art, an embodiment of the invention provides a river and ocean combined transportation container transportation system and method based on rail container trucks. The invention provides a river and ocean combined transportation container transport system based on rail container trucks.

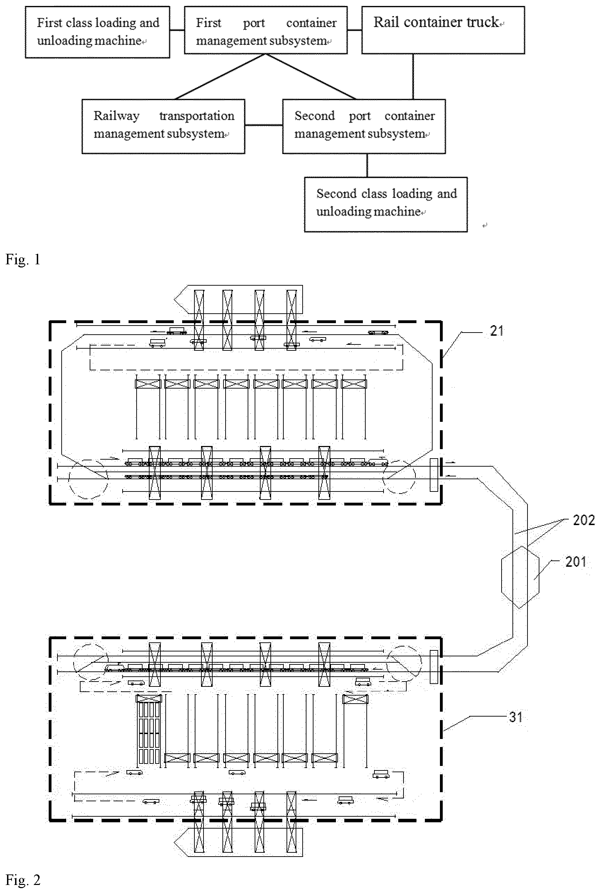

Referring to Fig. 1, provided is a schematic diagram of river and ocean combined transportation container transportation system based on rail container trucks according to an embodiment of the invention, and the system comprises a first port container management subsystem, a railway transportation management subsystem, a second port container management subsystem, rail container trucks, a first class loading and unloading machine for loading and unloading containers at a first port and a second class loading and unloading machine for loading and unloading containers at a second port, the first class loading and unloading machine comprising a first shore crane; wherein
the first port container management subsystem is used for receiving container warehouse order information transmitted by a first class transportation ship and generating container combined transportation forecast information based on the container warehouse order information; generating a loading plan and issuing the loading plan to the first shore crane, the rail container trucks and the railway transportation management subsystem according to the container combined transportation forecast information and a front storage yard condition of the first port; transmitting the container combined transportation forecast information to a railway transportation management subsystem after a customs release instruction is detected; the first class transportation ship is a container transportation ship arriving at the first port;
the railway transportation management subsystem is used for starting a traction engine according to the obtained loading plan so as to enable the traction engine to connect the rail container trucks parked in the preset area of the first port and loaded with the containers to form a railway train loaded with the containers; generating railway transportation planning according to the obtained container combined transportation forecast information, and dispatching the railway train to travel to a preset parking lot on one side of a front storage yard of a second port according to the railway transportation planning when the railway train satisfying the preset transportation conditions is detected; generating practical information of container combined transportation using the practical information of the loaded containers when the railway train arrives at a preset parking lot on one side of a front storage yard of a second port; and transmitting the practical information of the container combined transportation to a second port container management subsystem; the railway train travels by means of power provided by a traction engine;
the first shore crane is used for loading the containers in the first class transportation ship to the rail container trucks according to the loading plan;
the rail container trucks are used for loading the obtained containers according to the loading plan and traveling to a preset area of a first port;
the second port container management subsystem is used for determining a target storage yard location, a target loading and unloading machine and a target transportation ship based on practical information of the obtained container combined transportation, generating an unloading plan and a shipment plan, and issuing the unloading plan to the target loading and unloading machine; and issuing the shipment plan to the target loading and unloading machine after the target transportation ship arriving at the second port is detected; and
the target loading and unloading machine is used for unloading the containers loaded by the railway train according to the unloading plan, and parking the obtained unloaded containers to the target storage yard location; and loading the containers placed at the target storage yard location to the target transportation ship according to the shipment plan.

The first port and the second port may be a coastal deepwater port and an inland river port, respectively, or may be an inland river port and a coastal deepwater port, respectively. The first port can be a port of a ship to be unloaded, and the transportation ship docked at the first port can be a transportation ship with containers to be unloaded; the second port may be a port to be shipped and the transportation ship docked at the second port may be a transportation ship with containers to be loaded.

The coastal deepwater port can be a large coastal deepwater container port which is provided with a plurality of deepwater berths for berthing a large ocean-going container transportation ship; the inland port may be a large inland container port with inland berths for berthing inland container transportation ships.

The shore cranes of the first port and the second port may each have a number of container cranes operating alongside the shore, which may be referred to as shore cranes or quay cranes, respectively, and the shore cranes may be used for loading/unloading containers to transportation ships, wherein the shore cranes operating at the first port may be referred to as first shore cranes and second shore cranes, which may each be provided with a front storage yard for temporary stack of containers and waiting for transportation after collection, etc.; the front storage yard may be provided with a container crane, and the container crane provided in the front storage yard may include: at least one of a rail crane, a reach stacker, a gantry crane, etc is used for loading and unloading operations between a container yard and a transport vehicle (such as a port container truck, a rail container truck), and the front storage yard can be further provided with a plurality of port container trucks for container transportation in the yard between a ship and the front storage yard, between the front storage yard and a railway train in a port.

Among other things, container cranes and port container trucks for loading and unloading containers at a first port may be collectively referred to as a first class loading and unloading machine, and container cranes and port container trucks for loading and unloading containers at a second port may be collectively referred to as a second class loading and unloading machine.

The container warehouse order information may include information such as container numbers, a total number of containers, origin, destination, name of goods, special label (e.g., cold chain), etc. The container combined transportation forecast information may include information such as container numbers, a total number of containers, origin, destination, transfer port, transfer station name, goods name, transportation route record, transfer yard location, special mark , etc. The front storage yard condition includes information of stacked containers in the front storage yard, including: container numbers, a total number of containers, origin, destination, etc.

Rail container truck is a container rail powered flatcar for short, and can travel to different places in the port by its own driving force to achieve loading/unloading of containers. After a railway train is formed, it cannot travel by its own driving force, but by the power provided by traction engine. Railroad train can load containers, and the containers loaded by a railway train are those loaded by all of the rail container trucks constitute same.

The loading plan can be synchronously completed by the first shore crane, the rail container trucks and the railway transportation management subsystem, and the operation sequence of each device in executing the loading plan can be different. The loading plan can be used for indicating that the first shore crane, the rail container truck and the railway transportation management subsystem work cooperatively, so that the containers can be transferred from a first class transportation ship to rail container trucks, and a railway train loaded with the containers can be formed by utilizing the rail container truck loaded with the containers. Therefore, the containers do not need to be transferred to the railway train from the first class transportation ship through third-party equipment, so that the number of times of transfer of the containers is reduced, and the transportation efficiency is improved.

In one implementation, to further improve transportation efficiency, a preset area of a first port may be a preset parking lot on one side of a front storage yard of the first port, and all rail container trucks may initially be in a preset initial location, e.g., the initial location may be an area beside a first shore crane, or an area near the first port. The rail container truck may travel to the first shore crane according to a loading plan so that the first shore crane may load containers within the first class transportation ship into the rail container truck according to the loading plan, and the rail container truck obtains a container and loads same, and then travels to the preset area of the first port.

A railway transportation management subsystem starts a traction engine to enable the traction engine to connect rail container trucks parked in a preset area of a first port and loaded with containers to form a railway train loaded with containers; when the railway train satisfying the preset transportation conditions is detected, the railway train can also be dispatched to travel to a preset parking lot on one side of the front storage yard of the second port. The preset parking lot may be set in advance as required, and is not limited thereto. For example: a railway station area arranged in advance in a second port can also be a railway loading and unloading line arranged in advance on one side of a front storage yard of the second port.

In order to transfer the container from the first port to the second port, an import cargo declaration may be submitted to the customs and the customs formalities may be fulfilled. After a first port container management subsystem receives a customs clearance completion notice, it can be considered that the container is released from the customs, that is, a customs release instruction is detected, indicating that formalities for ocean and river combined transportation transfer from a first port to a second port are successfully completed, and the container combined transportation forecast information can be transmitted to the second port container management subsystem and the railway transportation management subsystem; the first class transportation ships are container transportation ships arriving at the first port.
according to the technical solution provided by the embodiment of the invention, the containers loaded by the first class transportation ship docked at the first port can be unloaded, and the unloaded containers can be loaded on the rail container trucks, and the railway train loaded with the containers can be formed by the rail container trucks loaded with the containers, so that the containers do not need to be transferred from the first class transportation ship to the railway train through third-party equipment, and the number of times of transfer of the containers is reduced, the transportation efficiency is further improved, the containers can be transported from the first port to the second port through the railway train. In the whole process, the containers do not need to be placed at the first port but are directly placed at a front storage yard of the second port, an area occupied in the storage yard of the first port is reduced, the utilization rate of the storage yard is improved, and the railway transportation speed is higher than the transportation speed of the ferry ships, so that the container transportation efficiency is improved; due to the fact that the railway transportation does not depend on the ship capacity, the ship tonnage and the ship quantity of the port, universality of the system is improved.

To facilitate unified management of container information, in one implementation, the system further includes a container management subsystem.
the first port container management subsystem is further used for transmitting the container combined transportation forecast information to the container management subsystem;
the railway transportation management subsystem is further used for transmitting practical information of the container combined transportation to the container management subsystem; and the second port container management subsystem is further used for transmitting the transportation information of the containers loaded to the target transportation ship to the container management subsystem.

Therefore, the container management subsystem can obtain the container combined transportation forecast information, the practical information of the container combined transportation and the transportation information of the containers loaded to the target container transportation ship, realizes monitoring of the container conditions in the transportation process involving the first port, the second port and the railway, and is beneficial to the unified management of the container information.

In one implementation, the railway transportation management subsystem detects that a railway train satisfies preset transportation conditions, specifically:
a total number of loaded containers of the railway train reaching a total number of containers in the container combined transportation forecast information is detected; or,
the containers loaded on the railway train satisfying the preset loading range of the railway train is detected; or,
a number of rail container trucks used to form a railway train reaching a preset total number of rail container trucks is detected.

The container combined transportation forecast information may include a total number of containers prepared to be transferred, so that when it is detected that the total number of containers loaded by the railway vehicle reaches the total number of containers in the container combined transportation forecast information, it may be considered that the detection of the railway train satisfies a preset transportation condition.

A preset loading range may include a transportation weight range and/or a transport length range, and the preset loading range may be set in advance, for example, the preset loading range may be 3,000 tons to 4,000 tons, and when it is detected that the total weight of containers loaded by a railway train is 3,000 tons to 4,000 tons, it may be considered that the railway train is detected to satisfy a preset transport condition, or the preset loading range may be calculated by Twenty feet Equivalent Unit (TEU), a TEU is a 20 ft container, and the preset loading range can be 120 TEUs. In addition, the number of the rail container trucks in the first port is limited, and it can be determined that the railway transportation management subsystem detects that the railway train satisfies the preset transportation conditions when detecting that the number of the rail container trucks forming the railway train arrives at the preset total number of the rail container trucks. The total number of the preset rail container trucks may be a total number of all rail container trucks in the first port, or may be a preset value, without limitation herein.

Specifically, according to the railway transportation plan, the railway transportation management subsystem dispatches a railway train to travel to a preset parking lot on one side of a front storage yard of a second port.
according to the railway transportation plan, a railway train is dispatched to start from a preset parking lot on one side of a front storage yard of a first port, enter a special railway section line between a first port and a second port across a first port management boundary, travel to a second port management boundary through the special railway section line, and travel to a preset parking lot on one side of the front storage yard of the second port across a second port management boundary.

The preset parking lot on one side of the front storage yard of the first port and the preset parking lot on one side of the front storage yard of the second port can be a railway loading and unloading line preset in the first port and a railway loading and unloading line preset in the second port respectively, and the railway loading and unloading line can be used for parking a railway train for containers to be loaded and unloaded.

Specifically, the railway transportation management subsystem comprises a railway dispatching command unit, and the railway dispatching command unit can comprise a station transportation subunit, an engine traction subunit and a station signal subunit; after receiving the container combined transportation forecast information transmitted by the first port container management subsystem, the railway transportation management subsystem can generate a railway transportation planning and transmit the railway transportation planning to the railway dispatching command unit; the railway dispatching command unit can issue a container transportation operation plan to a station transportation subunit, an engine traction subunit and a station signal subunit, so that the container transportation operation plan can be synchronously completed by the three subunits. The container transportation operation plan can comprise station management platform distribution, loading and unloading inspection, control of a traction engine to drive a railway train to travel, and signal control of turnouts and train speeds. The station transportation sub-unit directs the traction engine to be connected to a railway train for transporting containers, and the railway train is formed by connecting a plurality of rail container trucks. According to a container transportation operation plan, a railway train starts to cross a first port management boundary and enters a railway section line, this container train continues to travel, passes a special railway section line between two ports, crosses a railway loading and unloading line port management boundary and enters a railway loading and unloading line on one side of a second front storage yard to stop, indicating railway container transportation is completed.

In the railway transportation, accidents such as container loss, dropping and the like may occur, so that the actual information of the containers loaded by the railway train when the railway train arrives at the second port does not accord with the container combined transportation forecast information, therefore, in order to facilitate the container management subsystem of the second port to generate a more accurate unloading plan and a shipment plan according to the actual situation, the railway transportation management subsystem can generate practical information of the container combined transportation using the practical information of the containers loaded by the railway train when the railway train arrives at the preset parking lot on one side of the front storage yard of the second port; and transmit the practical information of the container combined transportation to the second port container management subsystem, so that the second port container management subsystem can obtain the practical information of the container combined transportation and generate an unloading plan and a shipment plan.

Compared with the existing container transportation system based on river and ocean combined transportation, a special railway section line can be directed to the front storage yard of the first port and the front storage yard of the second port respectively, so that the operation process is simplified, the traveling distance and number of times of the loading and unloading of a loading and unloading machine in a port are greatly reduced, and the transportation efficiency is improved.

In other implementations, the railway transportation management subsystem dispatches a railway train to travel to a preset parking lot on one side of the front storage yard of the second port according to the railway transportation plan.

According to the railway transportation plan, a railway train is dispatched to start from a preset parking lot on one side of the front storage yard of the first port, directly travel alongside a special railway section line between the first port and the second port, and directly travels to the preset parking lot on one side of the front storage yard of the second port through the special railway section line.

Alternatively, it may also be: according to the railway transportation plan, a railway train is dispatched to start from a preset parking lot on one side of a front storage yard of a first port, enter a special railway section line between a first port and a second port across a first port management boundary, travels to a second port station through the special railway section line, and travels to a preset parking lot on one side of a front storage yard of a second port across a second port management boundary from the second port station. In order to ensure that containers can be timely loaded and unloaded at the second port and improve the transportation efficiency, in one implementation, the first port container management subsystem is further used for transmitting the container combined transportation forecast information to the second port container management subsystem after a customs release instruction is detected;
the second port container management subsystem is further used for determining a predetermined storage yard location reserved for placing containers, a predetermined second class loading and unloading machine reserved for loading and unloading containers and a predetermined second class transportation ship reserved for transporting containers based on the obtained container combined transportation forecast information;
the second port container management subsystem determines a target storage yard location, a target loading and unloading machine and a target transportation ship based on practical information of the obtained container combined transportation, specifically: the second port container management subsystem determines a target storage yard location from a predetermined yard location, a target loading and unloading machine from a predetermined second class loading and unloading machine, and a target transportation ship from a predetermined second class transportation ship based on practical information of the obtained container combined transportation.

The target storage yard location may be a location in a front storage yard of a second port actually used to place the containers, the target loading and unloading machine may be a loading and unloading machine actually used to load and unload the containers in the second class loading and unloading machine, and the target transportation ship may be a transportation ship actually used to transport the containers in the second class transportation ship.

The second port container management subsystem may determine a reserved predetermined yard location, a predetermined second class loading and unloading machine, and a predetermined second class transportation ship prior to receiving practical information of the container combined transportation, thereby ensuring that there are sufficient second class loading and unloading machine in the second port to load and unload the containers, sufficient yard location to stack the containers, and sufficient second class transportation ship to transport the containers, the second class transportation ship being a transportation ship that will or has arrived at the second port.

Because the number of containers which actually need to be unloaded and loaded in the second port may be less than a total number of containers predicted in the container combined transportation prediction information, according to the practical information of the container combined transportation, determining a target storage yard location from a predetermined yard location, determining a target loading and unloading machine from a predetermined second class loading and unloading machine, and determining a target transportation ship from a predetermined second class loading and unloading machine can reduce a yard occupied area of the second port and improve a yard utilization rate of the second port. Compared with the containers loaded and unloaded by using the predetermined second class loading and unloading machine, the containers loaded and unloaded by using the target loading and unloading machine can improve the utilization rate of the loading and unloading machine and save the cost.

Specifically, the target loading and unloading machine can comprise a port container truck, a rail crane and a gantry crane, the target loading and unloading machine unloads the containers loaded by the railway train according to the unloading plan, and the unloaded containers are placed to a target storage yard location.
the gantry crane loads containers in a railway train at a preset parking lot on one side of the front storage yard of the second port to the port container trucks according to the unloading plan;
the port container truck loads a container according to the unloading plan and travels to one side of a target storage yard location; and
the rail crane unloads the containers loaded by port container trucks beside the target storage yard location to the target storage yard location according to the unloading plan.

The unloading plan can be synchronously completed by a port container trucks, a rail crane and a gantry crane, a sequence in operating each device in executing the unloading plan can be different, and each device can be mutually matched according to the unloading plan, so that unloading of containers in a railway train to a target storage yard location can be completed.

Port container trucks are different from rail container trucks, and the port container trucks are mainly used for transportation in a container yard between a ship in a port and a front storage yard and between the front storage yard and a railway train, and the rail container trucks not only can load containers, but also can be used for forming a railway train.

Or in another implementation, the equipment for unloading in the target loading and unloading machine can also only comprise a rail crane and a gantry crane, the target loading and unloading machine unloads the containers loaded by the railway train according to the unloading plan, and the unloaded containers are placed to a target storage yard location. The gantry crane transfers containers in a railway train at a preset parking lot on one side of a front storage yard of the second port to the rail crane according to the unloading plan; the rail crane transfers the loaded containers according to the unloading plan to the target storage yard location, so that the containers can be collected at the target storage yard location to wait for the target transportation ship to arrive at the port. The rail crane may be located beside the front storage yard.

In addition, in order to facilitate loading, the target loading and unloading machine further comprises a second shore crane, and the target loading and unloading machine loads containers placed at a target storage yard location to the target transportation ship according to the shipment plan, specifically:
the rail crane loads the containers placed to the target storage yard location to the port container truck according to the shipment plan;
the port container trucks are used for loading the obtained containers according to the shipment plan and traveling to a place near a ship berth of a second port; and
the second shore crane loads the containers in the port container trucks beside the ship berth of the second port to the target transportation ship according to the shipment plan.

The shipment plan can be synchronously completed by a port container trucks, a rail crane and a second shore crane, a sequence in operating each device in executing the unloading plan can be different, and the devices can be mutually matched according to the shipment plan, so that the containers placed at the target storage yard location can be loaded to the target transportation ship. Alternatively, in yet another implementation, the device for unloading in the target loading and unloading machine may also include only port container trucks and gantry cranes, and the device for loading in the target loading and unloading machine may also include only port container trucks and second shore cranes, the target loading and unloading machine unloads the railway train loaded with containers according to the unloading plan and places the unloaded containers to the target storage yard location, and loads the containers placed to a target storage yard location to a target transportation ship according to the shipment plan, specifically: a gantry crane grabs containers loaded by a railway train to a port container truck, for a target transportation ship arriving at a same destination as the containers waiting to be loaded at a port, the port container trucks directly transport the containers to a second port wharf, and the containers at the second port wharf are loaded to the target transportation ship by a second shore crane.

After the shipment is completed, container warehouse order information can be transmitted to the target ship so that the target ship can leave the port. The container warehouse order information may include container numbers, a total number of containers, origin, destination, special indicia (e.g., cold chain), etc.

The invention can be applied to land container transfer transportation between ports, for example, between a river port and a sea port, between river ports, between sea ports, or between port areas in a combined port. The invention can be applied when there can be a stable, large volume of container exchange between the two ports (zones) applied, and the linear distance between the ports (zones) is limited, e.g. not more than 200 km.

Embodiments of the invention are briefly described below by way of one specific example.

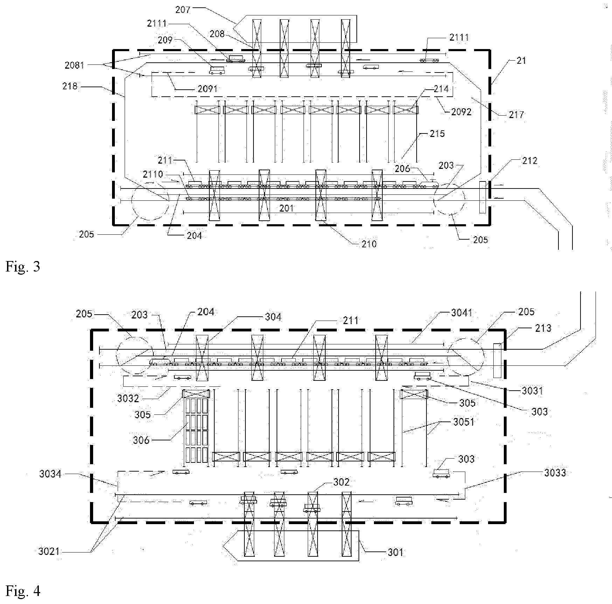

As shown in Figs. 2-4, a special railway station 201 and a special railway connecting line 202 for transporting containers may be provided between the first port 21 and the second port 31. On one of sides of front storage yards of both a first port 21 and a second port 31, provided are railway loading and unloading lines 203 (there might be a plurality of the railway loading and unloading lines, each of which may be parked a train to be loaded and unloaded) for parking railway trains to be loaded and unloaded, a running line 204 used for traction by a traction engine 206 of a railway train to cross over for turning round and unloading in a loading and unloading area, turnout zones 205 for changing the running line direction of the railway train, an electrified power supply contact network for providing engine traction kinetic energy and a railway traction engine 206 for traction of a train, and a railway communication system, a signal system and an interval blocking system for controlling operation of a railway train. The electrified power supply contact network for providing traction engine traction kinetic energy can be as follows: wires, overhead cables or aerial cables, etc., a railway communication system, a signal system and an interval blocking system can work cooperatively to control railway train operation.

A first class transportation ship 207 is docked at a wharf of a first port, a first shore crane 208 is arranged beside the wharf, a first rail crane 214 is arranged beside a front storage yard 215, and a railway train 211 loaded with containers can be obtained in the following modes:
Mode 1: the first shore crane 208 moves in a direction of a shore crane traveling rail 2081 according to the loading plan to load the containers from the first class transportation ship 207 to the rail container truck 2111 which loads the obtained containers according to the loading plan to travel along the rail container truck heavy-duty operation path 218 to the railway loading and unloading line 203 on one side of a yard of the first port, and the railway transportation management subsystem starts the traction engine 206 according to the obtained loading plan, so that the traction engine 206 interconnects the rail container trucks parked at the railway loading and unloading line 203 and loaded with containers to form a railway train 211 loaded with the containers;
Mode II: the first shore crane 208 moves along the shore crane path 2081 according to a loading plan to load the containers from the first class transportation ships 207 to the first port container truck 209 which travels along a port container truck path 2091 to the first port front storage yard 215 according to the loading plan, and the first rail crane 214 unloads the containers to the first port front storage yard 215, the unloaded first port container truck 209 returns along an empty container truck operation path 2092; the first rail crane 214 transfers the containers placed by the first port front storage yard 215 to a first gantry crane 210 according to a loading plan, and the first gantry crane 210 loads the obtained containers to the determined railway train to form a railway train 211 loaded with the containers;

After the railway train 211 loaded with containers is formed, and when the railway train satisfying a preset transportation conditions is detected, the railway transportation management subsystem dispatches the railway train 211 to start from the railway loading and unloading line 203, cross over the first port management boundary 212, enter the special railway section line 202 between the first port 21 and the second port 31, travel to the railway station 201 through the special railway connection line 202, continue to travel to the second port management boundary 213, travel across the second port management boundary 213 to the railroad loading and unloading line 203 on the side of the front storage yard of the second port.

A target transportation ship 301 is docked at the wharf of the second port, a second shore crane 302 is arranged beside the wharf, second port container trucks 303, a second gantry crane 304 and a second rail crane 305 are respectively arranged on one side of the front storage yard, second port container trucks 303 are arranged on the other side of the front storage yard, the second gantry crane 304 moves along a gantry crane traveling rail 3041 according to an unloading plan, and containers in the railway train 211 are moved to the second port container trucks 303; the second port container trucks 303 travel to the front storage yard according to a rail yard to the front storage yard 3031, the second rail crane 305 unloads the containers loaded by the second port container trucks 303 to a target location of the front storage yard 306, and the unloaded second port container trucks 303 return according to the front storage yard to rail loading and unloading line path 3032. The second rail crane 305 loads the containers placed at the target storage yard location to the second port container trucks 303 along the rail crane traveling rail 3051 according to a shipment plan. The second port container trucks 303 load the obtained container according to a shipment plan, travel by the front storage yard along a shore crane shipment path 3033 to a side of the second shore crane 302 which moves the container from the second port container trucks 303 to a target transportation ship 301 according to the shipment plan in the direction of the shore crane traveling rail 3021. The unloaded second port container trucks 303 travel along the shore crane shipment path to the front storage yard path 3034 and then returns.

By applying some embodiments of the invention, since the railway between the two ports is a special railway for container transfer transportation, and the railway train is pulled by a traction engine, the container loading, unloading and transportation of the rail container truck can be controlled by the railway transportation management subsystem, so that automatic control is realized, the efficiency is improved, and the labor cost can be greatly reduced. The whole railway transportation management subsystem does not need manual intervention except dispatching commanders and maintenance personnel. In addition, a special loading and unloading machine is arranged in the two ports, the whole system can achieve integrated operation of a production line, so that the transportation efficiency is improved. In addition, the railway line occupies less land area than the highway line with the same transportation volume, the transportation cost is low, the transportation efficiency is more than one time higher, the pollutant discharge amount of railway transportation is less than one seventh of that of the automobile with the same transportation volume, and the traction engine almost has no pollutant discharge, so the land occupation area is reduced. The transportation cost is reduced, the transportation efficiency is improved, and the pollutant discharge amount is reduced.

Furthermore, for containers to be transferred between two ports, the ship unloading party takes the front storage yard of the other party involved as the storage yard of the containers unloaded from the ship, so that the containers can be collected directly at the front storage yard of the other party involved. The storage yard area of the ship unloading party is reduced, and the storage yard utilization rate is improved.

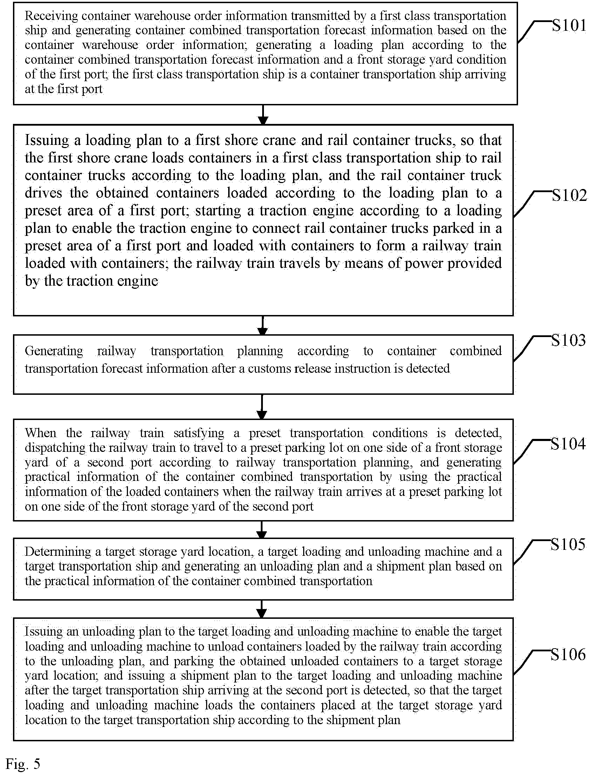

Corresponding to the embodiment of the river and ocean combined transportation container transportation system based on the rail container trucks, an embodiment of the invention provides a river and ocean combined transportation container transportation method based on the rail container trucks, as shown in Fig. 5, the method comprises the following steps:
5101, receiving container warehouse order information transmitted by a first class transportation ship and generating container combined transportation forecast information based on the container warehouse order information; generating a loading plan according to the container combined transportation forecast information and a front storage yard condition of the first port; the first class transportation ship is a container transportation ship arriving at the first port;
S102, issuing a loading plan to a first shore crane and rail container trucks, so that the first shore crane loads containers in a first class transportation ship to rail container trucks according to the loading plan, and the rail container truck drives the obtained containers loaded according to the loading plan to a preset area of a first port; starting a traction engine according to a loading plan to enable the traction engine to connect rail container trucks parked in a preset area of a first port and loaded with containers to form a railway train loaded with containers; the railway train travels by means of power provided by the traction engine;
S103, generating railway transportation planning according to container combined transportation forecast information after a customs release instruction is detected;
S104, when the railway train satisfying a preset transportation conditions is detected, dispatching the railway train to travel to a preset parking lot on one side of a front storage yard of a second port according to railway transportation planning, and generating practical information of the container combined transportation by using the practical information of the loaded containers when the railway train arrives at a preset parking lot on one side of the front storage yard of the second port; S105, determining a target storage yard location, a target loading and unloading machine and a target transportation ship and generating an unloading plan and a shipment plan based on the practical information of the container combined transportation;
S106, issuing an unloading plan to the target loading and unloading machine to enable the target loading and unloading machine to unload containers loaded by the railway train according to the unloading plan, and parking the obtained unloaded containers to a target storage yard location; and issuing a shipment plan to the target loading and unloading machine after the target transportation ship arriving at the second port is detected, so that the target loading and unloading machine loads the containers placed at the target storage yard location to the target transportation ship according to the shipment plan.
   according to the technical solution provided by the embodiment of the invention, the containers loaded by the first class transportation ship docked at the first port can be unloaded, and the unloaded containers can be loaded on the rail container trucks, and the railway train loaded with the containers can be formed by the rail container trucks loaded with the containers, so that the containers do not need to be transferred from the first class transportation ship to the railway train through third-party equipment, and the number of times of transfer of the containers is reduced, the transportation efficiency is further improved, the containers can be transported from the first port to the second port through the railway train. In the whole process, the containers do not need to be placed at the first port but are directly placed at a front storage yard of the second port, an area occupied in the storage yard of the first port is reduced, the utilization rate of the storage yard is improved, and the railway transportation speed is higher than the transportation speed of the ferry ships, so that the container transportation efficiency is improved; due to the fact that the railway transportation does not depend on the ship capacity, the ship tonnage and the ship quantity of the port, universality of the system is improved.

Optionally, after a customs release instruction is detected, the method further comprises the following steps:
a predetermined storage yard location reserved for placing containers, a predetermined second class loading and unloading machine reserved for loading and unloading the containers and a predetermined second class transportation ship reserved for transporting the containers are determined according to the container combined transportation forecast information;
determining a target storage yard location, a target loading and unloading machine and a target transportation ship based on practical information of the container combined transportation, wherein the method comprises the following steps:
   based on the practical information of the container combined transportation, a target storage yard location is determined from a predetermined yard location, a target loading and unloading machine is determined from a predetermined second class of loading and unloading machines, and a target transportation ship is determined from a predetermined second class of transportation ships.

The various embodiments described in this specification are described in a related manner, and like parts are referenced to each other between the various embodiments, with each embodiment highlighting differences from the other embodiments. In particular, for a method embodiment, since it is substantially similar to a system embodiment, the description is relatively simple, with reference to the partial description of the system embodiment.

The above mentioned are only preferred embodiments of the invention and not intended to limit the invention. Any modifications, equivalents, improvements, etc are intended to be included within the scope of this invention provided they come within the spirit and scope of this invention.

## Claims

1. A river and ocean combined transportation container transportation system based on rail container trucks, **characterized by** comprising a first port container management subsystem, a railway transportation management subsystem, a second port container management subsystem, rail container trucks, a first class loading and unloading machine for loading and unloading containers at a first port and a second class loading and unloading machine for loading and unloading containers at a second port, the first class loading and unloading machine comprising a first shore crane; wherein
the first port container management subsystem is used for receiving container warehouse order information transmitted by a first class transportation ship and generating container combined transportation forecast information based on the container warehouse order information; generating a loading plan and issuing the loading plan to the first shore crane, the rail container truck and the railway transportation management subsystem according to the container combined transportation forecast information and a front storage yard condition of the first port; transmitting the container combined transportation forecast information to a railway transportation management subsystem after a customs release instruction is detected; the first class transportation ship is a container transportation ship arriving at the first port;
the railway transportation management subsystem is used for starting a traction engine according to the obtained loading plan so as to enable the traction engine to connect the rail container trucks parked in the preset area of the first port and loaded with the containers to form a railway train loaded with the containers; generating railway transportation planning according to the obtained container combined transportation forecast information, and dispatching the railway train to travel to a preset parking lot on one side of a front storage yard of a second port according to the railway transportation planning when the railway train satisfying the preset transportation conditions is detected; generating practical information of container combined transportation using the practical information of the loaded containers when the railway train arrives at a preset parking lot on one side of a front storage yard of a second port; and transmitting the practical information of the container combined transportation to a second port container management subsystem; the railway train travels by means of power provided by a traction engine;
the first shore crane is used for loading the containers in the first class transportation ship to the rail container trucks according to the loading plan;
the rail container trucks are used for loading the obtained containers according to the loading plan and traveling to a preset area of a first port;
the second port container management subsystem is used for determining a target storage yard location, a target loading and unloading machine and a target transportation ship based on practical information of the obtained container combined transportation, generating an unloading plan and a shipment plan, and issuing the unloading plan to the target loading and unloading machine; and issuing the shipment plan to the target loading and unloading machine after the target transportation ship arriving at the second port is detected; and
the target loading and unloading machine is used for unloading the containers loaded by the railway train according to the unloading plan, and parking the obtained unloaded containers to the target storage yard location; and loading the containers placed in the target storage yard location to the target transportation ship according to the shipment plan.

2. The system according to claim 1, **characterized in that**,
the first port container management subsystem is further used for transmitting the container combined transportation forecast information to the second port container management subsystem after a customs release instruction is detected;
the second port container management subsystem is further used for determining a predetermined storage yard location reserved for placing containers, a predetermined second class loading and unloading machine reserved for loading and unloading containers and a predetermined second class transportation ship reserved for transporting containers based on the obtained container combined transportation forecast information;
the second port container management subsystem determines a target storage yard location, a target loading and unloading machine and a target transportation ship based on practical information of the obtained container combined transportation, specifically: the second port container management subsystem determines a target storage yard location from a predetermined yard location, a target loading and unloading machine from a predetermined second class loading and unloading machine, and a target transportation ship from a predetermined second class transportation ship based on practical information of the obtained container combined transportation.

3. The system according to claim 1, **characterized in that**, the system further comprises a container management subsystem, wherein
the first port container management subsystem is further used for transmitting the container combined transportation forecast information to the container management subsystem;
the railway transportation management subsystem is further used for transmitting practical information of the container combined transportation to the container management subsystem; and the second port container management subsystem is further used for transmitting the transportation information of the containers loaded to the target transportation ship to the container management subsystem.

4. The system according to claim 1, **characterized in that**, a preset area of a first port is a preset parking lot on one side of a front storage yard of a first port.

5. The system according to claim 1, **characterized in that**, the railway transportation management subsystem detects that the railway train satisfies preset transportation conditions, specifically:
a total number of loaded containers of the railway train reaching a total number of containers in the container combined transportation forecast information is detected; or,
the containers loaded on the railway train satisfying the preset loading range of the railway train is detected; or,
a number of rail container trucks used to form a railway train reaching a preset total number of rail container trucks is detected.

6. The system according to claim 4, **characterized in that**, the railway transportation management subsystem dispatches a railway train to travel to a preset parking lot on one side of a front storage yard of the second port according to the railway transportation plan, specifically:
according to the railway transportation plan, a railway train is dispatched to start from a preset parking lot on one side of a front storage yard of a first port, enter a special railway section line between a first port and a second port across a first port management boundary, travel to a second port management boundary through the special railway section line, and travel to a preset parking lot on one side of the front storage yard of the second port across a second port management boundary.

7. The system according to claim 1, **characterized in that**, the target loading and unloading machine comprises a rail crane and a gantry crane, the target loading and unloading machine unloads containers loaded by the railway train according to the unloading plan, and the unloaded containers are placed to a target storage yard location, specifically:
the gantry crane transfers containers in a railway train at a preset parking lot on one side of a front storage yard of the second port to the rail crane according to the unloading plan; and
the rail crane is used for transferring the loaded container to a target storage yard location according to the unloading plan.

8. The system according to claim 1, **characterized in that**, the target loading and unloading machine comprises port container trucks, a rail crane and a gantry crane, the target loading and unloading machine unloads containers loaded by railway trains according to the unloading plan, and the unloaded containers are placed to a target storage yard location, specifically:
the gantry crane loads the containers in the railway train at a preset parking lot on one side of the front storage yard of the second port to the port container trucks according to the unloading plan;
the port container trucks load containers according to the unloading plan and travel to one side of a target storage yard location; and
the rail crane unloads the containers loaded by the port container trucks beside the target storage yard location to the target storage yard location according to the unloading plan.

9. The system according to claim 8, **characterized in that**, the target loading and unloading machine further comprises a second shore crane, and the target loading and unloading machine loads containers placed at a target storage yard location to a target transportation ship according to the loading plan, specifically:
the rail crane loads the containers placed at a target storage yard location to the port container truck according to the shipment plan;
the port container trucks are used for loading the obtained containers according to the shipment plan and traveling to a place near a ship berth of a second port; and
the second shore crane loads the containers in the port container trucks beside the ship berth of the second port to the target transportation ship according to the shipment plan.

10. A river and ocean combined transportation container transportation method based on rail container trucks, **characterized by** comprising the following steps:
receiving container warehouse order information transmitted by a first class transportation ship, and generating container combined transportation forecast information based on the container warehouse order information; generating a loading plan according to container combined transportation forecast information and a front storage yard condition of a first port; a first class transportation ship is a container transportation ship arriving at a first port;
issuing the loading plan to a first shore crane and rail container trucks, so that the first shore crane loads containers in a first class transportation ship to rail container trucks according to the loading plan, and the rail container trucks load the obtained containers according to the loading plan and travel to a preset area of a first port; starting a traction engine according to the loading plan, so that the traction engine connects rail container trucks parked in a preset area of a first port and loaded with containers to form a railway train loaded with containers; and the railway train travels by means of power provided by a traction engine;
generating railway transportation planning according to the container combined transportation forecast information after a customs release instruction is detected;
dispatching the railway train to travel to a preset parking lot on one side of a front storage yard of a second port according to the railway transportation plan when the railway train satisfying the preset transportation conditions is detected, and generating practical information of the container combined transportation by using the practical information of the loaded containers when the railway train arrives at the preset parking lot on one side of the front storage yard of the second port;
determining a target storage yard location, a target loading and unloading machine and a target transportation ship and generating an unloading plan and a shipment plan based on the practical information of the container combined transportation;
issuing the unloading plan to the target loading and unloading machine, so that the target loading and unloading machine unloads the containers loaded by the railway train according to the unloading plan, and parking the obtained unloaded containers to the target storage yard location; and issuing the shipment plan to the target loading and unloading machine after a target transportation ship arriving at the second port is detected, so that the target loading and unloading machine loads the containers placed at the target storage yard location to the target transportation ship according to the shipment plan.
